# EUROPEAN PATENT SPECIFICATION

(11) **EP 0 757 016 B1**
(45) Date of publication and mention of the grant of the patent: **05.04.2000**
(21) Application number: 96830302.4
(22) Date of filing: 24.05.1996
(51) Int. Cl.: C02F 1/04, B01D 1/00, B01D 1/26, B01D 3/10

(54) **Purification, regeneration and recycling process for industrial sewage**
Reinigung, Regenerierung und Rezyklierung von industriellem Abwasser
Purification, régénération et recyclage des eaux usées industrielles

(30) Priority: 04.08.1995 IT MC950093
(43) Date of publication of application: 05.02.1997
(73) Proprietor: Bipiemme S.r.l., 60025 Loreto (AN) (IT)
(72) Inventor: Pietrella, Bruno, 60025 - Loreto (AN) (IT)
(74) Representative: Baldi, Claudio

(56) References cited:
- WO-A-92/14530
- WO-A-93/16004
- US-A- 3 725 205
- US-A- 3 827 946

## Description

This patent concerns an industrial process for the purification, regeneration and recycling of industrial sewage, by means of vaporisation.

The patent protection is also extended to the plant for realisation of the process according to the invention.

The process of distillation of sewage, domestic and/or industrial wastewater, at high or low pressure, with or without preheating of the feed is a widespread and common practice that has long been in use, since it owes its origins to the water cycle that occurs in nature.

Patent US 3 725 205 A describes a process for cleaning domestic sewage and disposal of the solid residues. The disposal of the solids takes place by means of their incineration followed up by a system of post-combustion of the gases. This is possible because the residues of the evaporation are mainly of an organic nature since they come from domestic wastewater.

In the process described in Patent US 3 725 205 A there is a phase of preheating of the influent which is provided by a thermal exchange with the exhaust gases that result from the phase of incineration of the sludge and post-combustion of the gases; this process does not use diathermic oil and the fuel for the two burners is not specified; this process evaporates the sewage at ambient temperature and under reduced pressure vacuum evaporation; this process does not produce residual sludge.

Patent WO 93 16004 A describes a process for treating extremely dirty waters (not more specifically defined) after distillation over several evaporators in a cascade, obtaining a clean effluent and a solid residue that must be disposed of; in this process there is no preheating phase for the influent, which is dosed, by means of a conduct into the vaporisers; in this process the evaporation phase takes place, at a constant temperature. This process uses an external heat generator (not more specifically defined) for heating the first evaporator and the system of post-heating of the vapours; the heating of the evaporator is ensured, in the stationary phase, by the vapour generated by the previous distiller, while the external source is used to compensate for the heat losses in the vaporisers; said process produces clean water and a solid residue that must be disposed of.

The process in question is designed for the purification of sewage and production of water which is then recycled for industrial use and/or used as drinking water.

The process according to the invention is of enormous ecological and energetic value since it permits a significant saving in water consumption, purification costs and in the costs of water resource supplies.

The benefits to the environment are also considerable since today the only systems available for treating industrial sewage are open top chemical-biological purification systems.

With respect to chemical systems the process according to the invention has the added advantage of totally eliminating the use of chemicals, doing away with the need for storing the sewage before purification and the storage of sludge.

Use of the process according to the invention also produces sludge which contains only sedimentary and dried product in very small quantities (just 10% of the original sewage) as well as ensuring the concrete possibility of disposing of these as special products.

The purification process according to the invention consists of the operating stages as defined in claim 1.

Merely for purposes of illustration, the following data were obtained with the process according to the invention in a 30,000 kcal/h pilot plant with a capacity for treating 50 kg/h of sewage at a working pressure of 0.5 kg/sq.m., supplied by methane gas.

The following are the data obtained from the plant referring to the product before and after treatment:
- incoming sewage (before treatment) watery liquid with pH 3.67: no sedimenting materials present ml/l; total suspended matter 10 mg/l; COD 305 mgll; aluminium (Al) not assessable mgll; copper (CU) 39.8 mg/l; sulphates (S04=) 1518 mg/1; chlorides (Cl-) 418 mg/1; phosphorous (P) not assessable mg/1; ammonia nitrogen (NH4+) 10.6 mg/l; nitrous nitrogen (N) not assessable mg/l; nitric nitrogen (N) 2.9 mg/l; surface-active substances 0.8 mg/l:
- outgoing liquid (after treatment) water pH 8.71; no sedimenting materials present ml/l; no suspended matter present mg/l; COD 70 mg/1; specific electric conductivity at 20° C 48 /cm; oxidation (02) (Kubel) 0.90 mgll; aluminium (Al) not assessable mg/l; copper (Cu) not assessable mg/l; sulphates (SO4=) 0.40 mg/l; chlorides (Cl-) 2.30 mg/l; phosphorous (P) not assessable mg/l; ammonia nitrogen (NH4+) 12.00 mg/l; nitrous nitrogen (N) not assessable mg/l; nitric nitrogen (N) 0.90 mg/l; surface-active substances not assessable mgll.

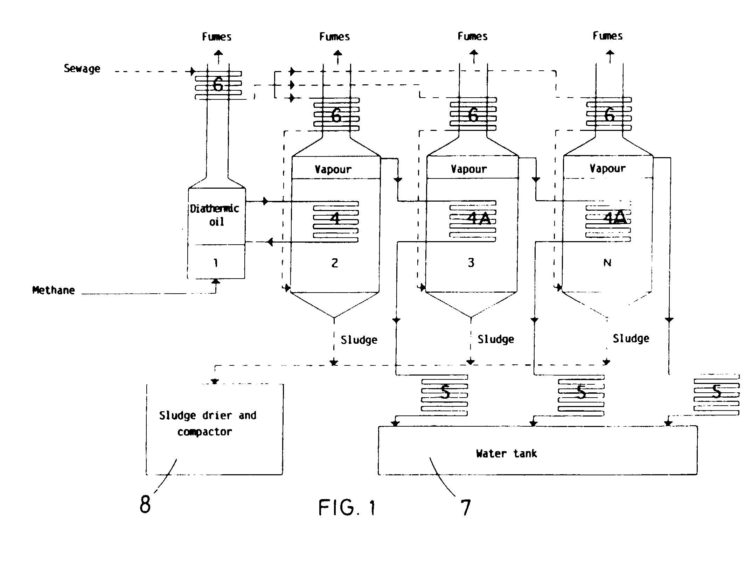

These results confirm the possibility of using the outgoing water as industrial water giving a significant saving on water consumption in general since the water, 90% of which is recovered, can be reused immediately in the production cycle. Fig. 1 is a diagram of a preferred embodiment of the plant for the realisation of the process according to the invention.

The system consists of:
- a methane burner (1) for heating the oil that supplies the vaporiser (4);
- two or more boilers (2, 3 and N) for vaporisation of the sewage;
- sewage preheating units (6);
- condensers (5);
- a condensate water tank (7);
- a sludge drier and compactor (8).

According to the system shown in fig. 1, the sewage is firstly preheated by means of the burner (1) fumes and then by means of fumes of the vaporisation boilers (2,3 and N) in which the sewage is placed; the sewage in the first boiler (2) is vaporised by means of a vaporiser (4) supplied by the hot oil from burner (1).

The vaporisers (4a) of the boilers (2, 3 and N), after the first, are supplied by the steam produced in the boiler immediately preceding it.

The steam obtained by vaporisation of the sewage in each vaporisation boiler is condensed and drained into a tank (7).

## Claims

1. An industrial process for the purification, regeneration and recycling of industrial sewage characterised by the following operating phases:
- preheating of the sewage at a temperature of about 80°C
- vaporisation, by means of a cascade of two or more vaporisers, of sewage at a temperature of about 200°C at low pressure (0.5 - 15 atm), in which the first evaporator uses oil heated by means of a burner powered by methane gas, while the evaporators following the first one use the vapour produced by the previous evaporator;
- condensation at ambient temperature and pressure of the vapour obtained from the sewage vaporisation phase;
- tapping of the sludge obtained from the sewage vaporisation stage;
- disposing of the sludge upon drying and compaction, and whereby
- the preheating takes place firstly by means of a thermal exchange between the sewage and the fumes of the methane burner and subsequently between the sewage and the fumes of the vaporisation boilers";

2. A system for realisation of purification process as per claim 1 characterised by:
- a methane burner (1) for heating the oil utilised for sewage vaporisation;
- two or more sewage vaporisation boilers (2, 3 N);
- at least two sewage vaporiser units (4 and 4A) arranged in such a way that the first of the vaporiser units uses the oil heated from the burner while the subsequent evaporators use the vapour produced by the previous one;
- sewage preheating units (6) which are arranged in such a way that the preheating takes place firstly by means of a thermal exchange between the sewage and the fumes of the methane burner (1) and subsequently between the sewage and the fumes produced by vaporisation boilers (2, 3N);
- condensers (5) for condensing the vapour obtained from the sewage vaporisation phase;
- tank for the condensate water (7);
- sludge dryer and compactor (8).

## Patentansprüche

1. Industrieverfahren zur Klärung, Rückgewinnung und Wiederverwendung von Industrieabwässern, dadurch gekennzeichnet, daß es folgende Arbeitsphasen umfaßt:
- Vorwärmen der Abwässer auf etwa 80°C;
- Verdampfen der Abwässer bei einer Temperatur von ca. 200°C und niedrigem Druck (0,5-15 atm) mittels einer Kaskade von zwei oder mehreren Verdampfern, wobei im ersten Verdampfer Öl verwendet wird, welches mittels eines Methanbrenners erhitzt wird, während die nachfolgenden Verdampfer den im vorhergehenden Verdampfer erzeugten Dampf verwenden;
- Kondensieren des während der Verdampfungsphase der Abwässer erzeugten Dampfes auf Umgebungstemperatur und -druck;
- Abstechen des während des Verdampfens der Abwässer erzeugten Schlammes;
- Entsorgung des Schlammes nach erfolgter Trocknung und Kompaktierung, wobei das Vorwärmen zuerst mittels Wärmeaustausch zwischen den Abwässern und den Rauchgasen des Methanbrenners und anschließend zwischen den Abwässern und den Rauchgasen der Verdampfungskessel erfolgt;

2. Anlage zur Realisierung des Klärverfahrens gemäß Anspruch 1), dadurch gekennzeichnet, daß sie folgendes umfaßt:
- einen Methanbrenner (1) zum Erhitzen des zum Verdampfen der Abwässer benötigten Öls;
- zwei oder mehrere Heizkessel (2, 3N) zum Verdampfen der Abwässer;
- mindestens zwei Abwasserverdampfergruppen (4 und 4A), die so angeordnet sind, daß im ersten Verdampfer das vom Brenner erhitzte Öl benutzt wird, während in den nachfolgenden Verdampfern jeweils der vom vorhergehenden Verdampfer erzeugte Dampf benutzt wird;
- Abwasservorheizgruppen (6), die so angeordnet sind, daß das Vorwärmen mittels Wärmeaustausch zuerst zwischen den Abwässern und den Rauchgasen des Methanbrenners (1) und anschließend zwischen den Abwässern und den von den Verdampfern (2, 3N) erzeugten Rauchgasen erfolgt;
- Kondensatoren (5) für den beim Verdampfen der Abwässer erzeugten Dampf;
- Auffangbecken für das Kondenswasser (7);
- Schlammtrockner und -kompaktierer (8).

## Revendications

1. Procédé industriel pour la dépuration, la régénération et la réutilisation des purins industriels, caractérisé en ce qu'il comprend les phases opérationnelles suivantes:
- un pré-réchauffement des purins à température de l'ordre de 80°C;
- vaporisation, à l'aide d'une cascade de deux ou de plusieurs vaporisateurs, des purins à une température d'environ 200°C, à faibles pressions (de 0,5 à 15 atm), là où le premier évaporateur utilise de l'huile réchauffée au moyen d'un brûleur à gaz méthane, tandis que les évaporateurs successifs au premier utilisent la vapeur produite dans l'évaporateur précédent;
- une condensation à température et pression ambiantes de la vapeur obtenue suite à la phase de vaporisation des purins;
- un égouttement des boues obtenues suite à la phase de vaporisation des purins;
- écoulement des boues après préalable séchage et compactage et où le pré-réchauffement a lieu d'abord au moyen d'un échange thermique entre les purins et les fumées du brûleur à méthane et ensuite entre les purins et les fumées des chaudières de vaporisation.

2. Installation pour la réalisation du procédé de dépuration dont à la revendication 1), caractérisée en ce qu'elle comprend:
- un brûleur à méthane (1) pour le réchauffement de l'huile utilisée pour la vaporisation des purins;
- deux ou plus chaudières (2, 3N) de vaporisation des purins;
- au moins deux groupes de vaporisateurs (4 et 4A) des purins, disposés de manière à ce que le premier des vaporisateurs utilise l'huile réchauffée par le brûleur, tandis que les évaporateurs successifs utilisent la vapeur produite par le précédent;
- groupes de pré-réchauffement (6) des purins, disposés de manière à ce que le pré-réchauffement s'effectue d'abord au moyen d'un échange thermique entre les purins et les fumées du brûleur à méthane (1) et successivement entre les purins et les fumées produites par les vaporisateurs (2, 3N);
- condensateurs (5) de la vapeur obtenue suite à la vaporisation des purins;
- une cuve de récolte de l'eau de condensation (7);
- un séchoir et compacteur de boues (8).
